# EUROPÄISCHE PATENTSCHRIFT

(11) **EP 0 676 034 B1**
(45) Veröffentlichungstag und Bekanntmachung des Hinweises auf die Patenterteilung: **18.06.1997**
(21) Anmeldenummer: 94902602.5
(22) Anmeldetag: 16.12.1993
(51) Int. Cl.: G01C 15/04

(54) **ABMARKUNGSSTEIN**
MARKER POST
BORNE

(30) Priorität: 19.12.1992 DE 4243241
(43) Veröffentlichungstag der Anmeldung: 11.10.1995
(73) Patentinhaber: WIECKOWSKI, Maria, D-65197 Wiesbaden (DE)
(72) Erfinder: WIECKOWSKI, Maria, D-65197 Wiesbaden (DE)
(86) Internationale Anmeldenummer: DE9301201
(87) Internationale Veröffentlichungsnummer: WO9415175

(56) Entgegenhaltungen:
- DE-U- 7 824 352
- DE-U- 9 310 404
- FR-A- 2 420 122

## Beschreibung

Die vorliegende Erfindung bezieht sich auf einen Abmarkungsstein, um im Gelände Vermessungspunkte dauerhaft abzumarken oder den Verlauf von unterirdischen Leitungen und dergl. zu bezeichnen.

Abmarkungssteine sind traditionell tatsächlich behauene Steine, die aufwendig herzustellen und schwer zu transportieren sind und auch beim Einsetzen in das Erdreich Kraft, Aufwand und Mühe kosten.

Zur Vermeidung solcher Nachteile wird Vermarkungsmaterial heute vielfach aus Kunststoff oder anderen leichten Materialien hergestellt. Ein aus DE-GM 78 24 352 bekannter Kabelmerkstein ist ein Kunststoffhohlkörper rechteckigen Querschnitts, der oben geschlossen ist, sich nach unten schwach kegelförmig erweitert und am unteren Rand nach außen weisende Ränder hat, die als Verankerungskragen wirken. Dieser bekannte Abmarkungsstein wird mit dem ausgehobenen Erdreich gefüllt und an der gewünschten Stelle eingesetzt.

Der bekannte Abmarkungsstein ist zwar leicht und deshalb einfach zu transportieren und zu handhaben, jedoch nicht ausreichend stabil. Er besteht aus zwei in einer durch seine Achse gehende Längsschnittebene zusammenstoßenden und miteinander verklebten Hälften und ist auch nicht geschlossen, sondern nur mittels eines Deckels verschließbar, welcher Vertiefungen zum Einsetzen von als Informations-träger dienenden Leisten aufweist. Der Deckel ist in eingesetzter Stellung von an ihm angeformten Rastnasen gehalten, welche unter den Öffnungsrand des Hohlkörpers des bekannten Abmarkungssteins greifen. Die Wandstärke ist überall, einschließlich der des Deckels, die gleiche.

Auf dieser Weise besteht der bekannte Abmarkungsstein aus mehreren Teilen, wobei der Deckel nur lose in die Kopföffnung des Hohlkörpers eingelegt ist. Dies hat zur Folge, daß der bekannte Abmarkungsstein unstabil und wenig widerstandsfähig gegenüber äußeren Kraftbeaufschlagungen ist. Schon beim Handhaben und Einsetzen des bekannten Kabelmerksteins fehlt es diesem an der wünschenswerten Verwindungssteifigkeit. Zwar kann der bekannte Stein nach dem Einsetzen bei entferntem Deckel mit Erdreich gefüllt und dieses verdichtet werden, jedoch bleibt die mangelhafte Stabilität und Festigkeit im aus dem Erdreich herausragenden Kopfbereich, der äußeren Angriffen wie Betreten oder Überfahren besonders ausgesetzt ist.

Auf Grund seiner Konstruktion kann mit dem bekannten Kabelmakstein die Lage von unterirdischen Leitungen und dergl. mit einer Genauigkeit von ±15 bis 30 cm angezeigt werden, was für diese Anwendungsfälle als völlig ausreichend anzusehen ist. Im modernen Vermessungswesen dagegen, wo die Genauigkeitsanforderungen um mehrere Größenordnungen strenger sind, wirkt sich der Mangel an Stabilität und Festigkeit der bekannten Ausbildung als schwerwiegender Nachteil aus. Die Genauigkeitsanforderungen sind hier ,unter Einsatz elektronischer Entfernungsmeßverfahren, sehr hoch und erfordern eine zuverlässige und dauerhafte Bestimmung der Lage der Meßpunkte auf den Millimeter genau. Der bekannte Kabelmarkstein käme deshalb als Abmarkungsstein zur Festlegung eines Polygonpunkts oder eines Höhenmeßpunkts oder als Grenzstein nicht in Frage.

Aufgabe der vorliegenden Erfindung ist die Schaffung eines sofort einsatzbereiten, vielseitig verwendbaren Abmarkungssteins für Lage- und Höhenmessungen sowie auch zum Kennzeichnen des Verlaufs unterirdisch verlegter Kabel, Rohrleitungen und dergl., der sich bei geringem Gewicht vor allem durch Extrem hohe Stabilität im Erdreich sowie Festigkeit und Widerstandsfähigkeit gegenüber Krafteinwirkungen auszeichnet.

Die Lösung der gestellten Aufgabe gelingt durch die im unabhängigen Patentanspruch angegebenen Merkmale. Die einstückige und im Kopfbereich des den Abmarkungsstein darstellenden Hohlkörpers verstärkte Ausbildung ergibt eine stabile, verwindungssteife und formbeständige Ausbildung, die insbesondere im äußeren Angriffen ausgesetzten Kopfbereich allen vorkommenden Beanspruchungen standzuhalten geeignet ist.

Die zweckmäßigerweise kuppelartige Wölbung der inneren Berandung des Kopfbereichs im Längsschnitt ergibt eine besonders massive Stabilität gegenüber den Beanspruchungen, die bei bekannten Ausbildungen am häufigsten zerstörend wirken, nämlich schräg von oben angreifenden stoß- oder schlagartigen Beanspruchungen.

Dabei ist es weiterhin zweckmäßig, wenn der die Innenwölbung umgrenzte Raum rotationssymmetrisch ist, insbesondere die Form einer Halbkugel, eines halben Ellipsoids oder eines Paraboloids aufweist. Dies gilt auch dann, wenn der Außenquerschnitt des Kopfbereichs nicht rotationssymetrisch, also kreisförmig ist, sondern eine andere Querschnittsform aufweist, insbesondere eine abgerundet quadratische oder andersartig mehreckige.

In einer zweckmäßigen Weiterbildung der Erfindung ist der Übergang der Innenkontur des Kopfbereichs zur inneren Seitenfläche der Seitenwand als Schulter ausgebildet, deren Form und Abmessungen der Außengestalt des Übergangs von der Kopffläche zur äußeren Seitenfläche entspricht. Durch eine solche Ausbildung können die Abmarkungssteine durch Ineinanderstecken gestapelt werden, ohne daß die Gefahr eines Verkeilens auftritt, welches das Trennen der einzelnen Körper voneinander erschweren könnte.

An sich besteht angesichts der schwach konischen Form der Hohlkörper bei einem Inneinanderstecken die Gefahr des Festklemmens der Körper ineinander. Wenn jedoch die Schulter in Höhenrichtung so angebracht wird, daß bei Berührung des Kopfflächen-Seitenflächen-Übergangsrandes des eingesteckten Körpers an die Schulter des aufnehmenden Körpers anstößt, bevor es zur Berührung der Mantelflächen und zur Verkeilungswirkung kommt, so kann auch eine Vielzahl von Abmarkungssteinen aufeinandergetürmt werden, ohne daß die das Gewicht des Turms tragenden unter Körper sich verklemmen.

Der untere Rand des Hohlkörpers sollte in an sich bekannter Weise einen nach außen abgewinkelten Randstreifen aufweisen, der bei ins Erdreich eingesetzten Abmarkungsstein als Ankerfuß wirkt. Dieser sollte in zweckmäßiger Weiterbildung der Erfindung einen quadratischen Umriß auch dann haben wenn die Querschnittsform des Körpers an sich eine kreisförmige ist. In diesem Fall wirkt der quadratische Fuß bei liegender Aufbewahrung der Abmarkungssteine stabilisierend und diese können nicht, beispielsweise während des Transports, unkontrolliert über die Ladefläche eines Fahrzeugs rollen.

Die runde Querschnittsform des Körpers des Abmarkungssteins ist deshalb vorzuziehen. weil bei einer seitlichen Kraftbeaufschlagung die Gestalt des Körpers die Tendenz hat, sich abzuplatten und dabei seitlich auszuweichen, was zu einer Verspreizung des Körpers im Erdreich führt.

Das Material zur Herstellung des erfindungsgemäßen Abmarkungssteins kann an sich irgendein geeignetes sein, beispielsweise Metall, Beton, Polyesterbeton oder dergl. ; zweckmäßigerweise wird jedoch zur Herstellung ein geeigneter schlagzäher Kunststoff verwendet, der bei Bedarf durch Glasfaser- oder Karbonfasereinlagen zusätzlich verstärkt sein kann.

Die erforderlichen Markierungszeichen werden zweckmäßigerweise schon bei der Herstellung in der Kopffläche eingeprägt bzw. ausgeformt.

Die Erfindung wird nachfolgend durch die Beschreibung eines bevorzugten Ausführungsbeispiels näher erläutert.

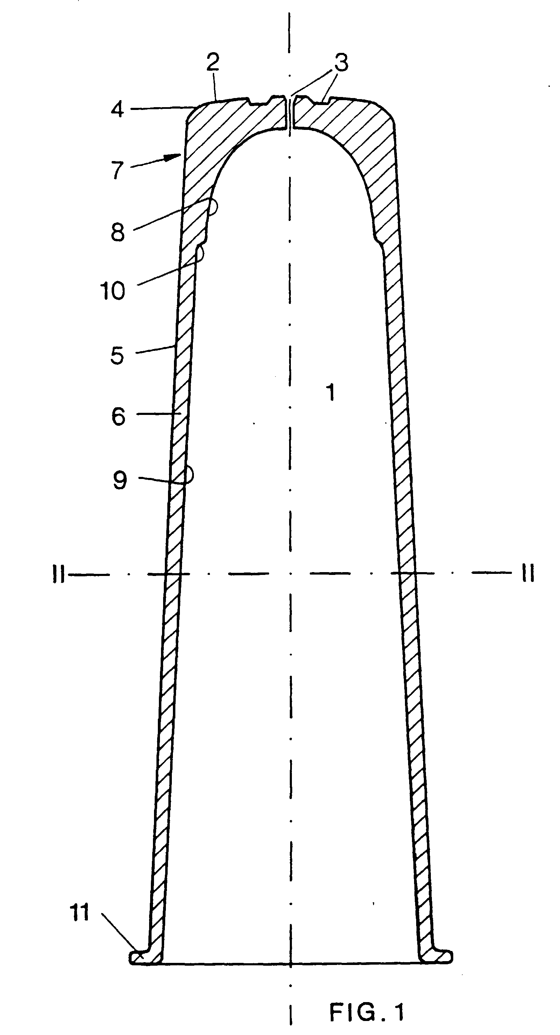

Es zeigt
Fig. 1 einen Abmarkungsstein im Längsschnitt

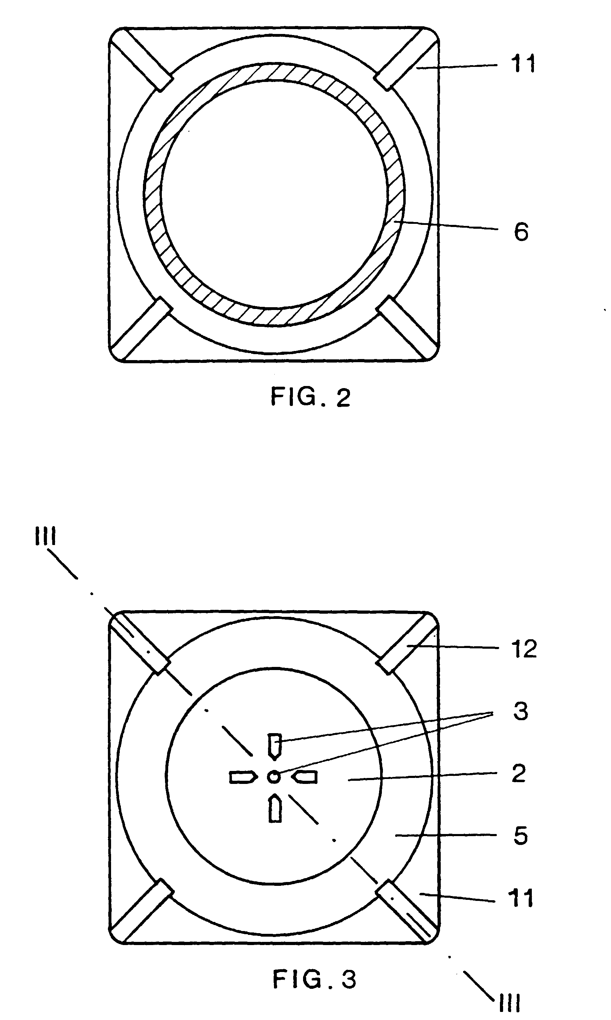

Fig. 2 den Schnitt II - II in Fig. 1;
Fig. 3 die Draufsicht auf den Abmarkungsstein ;

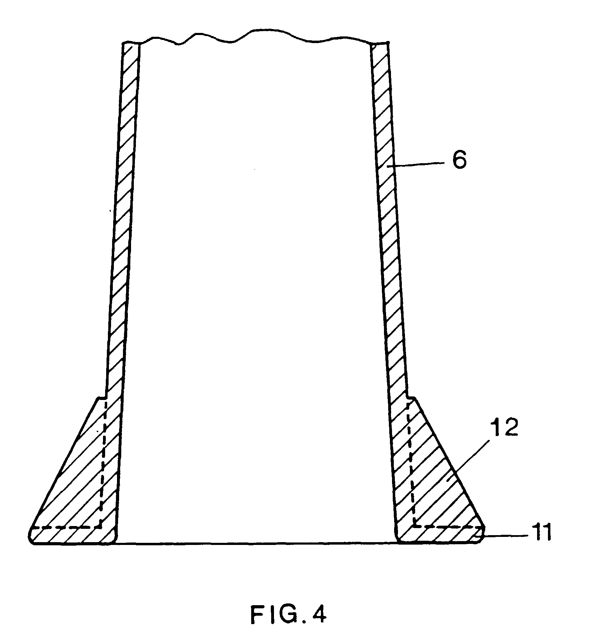

Fig. 4 den Schnitt III-III in Fig. 3 .

Der erfindungsgemäße Abmarkungsstein ist ein einstückiger Hohlkörper **1**, vorzugsweise aus faserverstärktem Kunststoff. Im wesentlichen stellt er einen oben geschlossenen und unten offenen, schwach konischen Kegelstumpf dar. Seine Kopffläche **2** ist eben oder vorzugsweise schwach bombiert und in ihr sind die erforderlichen Markierungszeichen **3** eingeprägt. Die Kopffläche **2** geht mittels einer zweckmäßigen Abrundung **4** in die äußere Seitenfläche **5** über.

Die Seitenwand ist von gleichmäßiger Wandstärke und geht oben in einen verstärkten Kopfbereich **7** über. Dieser ist in der Weise verstärkt, daß seine innere Berandung **8** etwa halbkugelig gewölbt ist, so daß vor allem die Übergangsecken sehr massiv ausfallen und besonders stabil sind gegenüber den gefährlichen Beanspruchungen schräg von oben, wie sie beim Überfahren auftreten können.

An der Übergangsstelle der inneren Seitenfläche **9** des Hohlkörpers **1** in die Innenkontur **8** des Kopfbereichs **7** ist eine Schulter **10** ausgebildet, welche entsprechend dem Übergangsrand **4** derart dimensioniert ist, daß bei einem Ineinanderstecken von gleichartigen Abmarkungssteinen der Übergangsrand **4** des eingesteckten Körpers zur Anlage an der Schulter **10** des aufnehmenden Körpers kommt, bevor die Körper sich auf Grund ihrer schwachen Konizität ineinander verkeilen können.

Am unteren offenen Ende des Körpers **1** ist die Seitenwand **6** unter Ausbildung eines Ankerfußes **11** nach außen abgewinkelt, wobei der den Ankerfuß bildende Randstreifen in einer waagerechten Ebene liegt und einen quadratischen Außenumriß aufweist.

An den Ecken des quadratischen Ankerfußes **11** sind Versteifungsrippen **12** etwa dreieckförmiger Gestalt ausgebildet, welche die Abwinklung des Ankerfußes **11** gegenüber der Seitenwand **6** stabilisieren und somit dessen Ankerwirkung verbessern sowie auch Drehungen des im Erdreich eingesetzten Abmarkungssteins um seine Längsachse zuverlässig verhindern.

Der beschriebene Abmarkungsstein kann leicht transportiert werden. Ineinandergesteckt kann auch eine große Zahl von Abmarkungssteinen kompakt verpackt werden. Auch bei liegendem Transport ist die Lagestabilität wegen des quadratischen Ankerfußes **11** gewährleistet. Es besteht keine Gefahr, daß die Körper über z.B. die Ladefläche eines Transportfahrzeugs rollen.

Wegen des geringen Gewichts der Abmarkungssteine kann ein Mann eine Vielzahl derselben Schultern und bequem zur Verwendungsstelle tragen.

Der beschriebene Abmarkungsstein kann genau so verwendet und eingesetzt werden wie die üblichen Abmarkungssteine aus Naturstein oder die Betonsteine. d.h. ohne besondere Vorbereitungs- oder Zusatzmaßnahmen. Wenn jedoch besonderen Wert auf höhere Festigkeit gelegt wird, kann der erfindungsgemäße Abmarkungsstein nach dem Ausheben des Erdlochs mit dem ausgehobenen Erdreich dicht gefüllt und sodann eingesetzt werden, wobei das um den Körper herum einzufüllende Erdreich entsprechend verdichtet wird. Dabei entsteht eine absolut dauerhafte Abmarkung. Die bevorzugte runde Querschnittsform ist dabei auch gegenüber seitlich angreifenden Kräften sehr widerstandsfähig, wobei die Tendenz des Hohlkörpers, sich unter der Wirkung von Seitenkräften abzuplatten und quer zur Kraftangriffsrichtung aufzuspreizen, zu einer zusätzlichen Verankerung führt.

## Patentansprüche

1. Abmarkungsstein in Form eines unten offenen und sich nach unten schwach konisch verbreiternden Hohlkörpers (**1**) mit einer die Markierungskennzeichen (**3**) aufweisenden ebenen oder schwach bombierten Kopffläche (**2**) die im wesentlichen eckig in die äußere Seitenfläche (**5**) übergeht, gekennzeichnet durch eine einstückige und im Kopfbereich (**7**) durch größere Wanddicke verstärkte Ausbildung.

2. Abmarkungsstein nach Anspruch 1, dadurch gekennzeichnet, daß die innere Berandung des Kopfbereichs (**7**) im Längsschnitt kuppelartig gewölbt ist.

3. Abmarkungsstein nach Anspruch 2, dadurch gekennzeichnet, daß die Innenkontur (**8**) des Kopfbereichs (**7**) halbkugelig, elliptisch oder parabolisch berandet ist.

4. Abmarkungsstein nach einem der Ansprüche 2 und/oder 3, dadurch gekennzeichnet, daß der Übergang der Innenkontur (**8**) des Kopfbereichs (**7**) zur inneren Seitenfläche (**9**) der Seitenwand (**6**) als Schulter (**10**) ausgebildet ist, deren Form und Abmessungen der Außengestalt des Übergangs (**4**) von der Kopffläche (**2**) zur äußeren Seitenfläche (**5**) entspricht.

5. Abmarkungsstein nach einem oder mehreren vorhergehenden Ansprüche, gekennzeichnet durch einen am unteren Rand des Hohlkörpers (**1**) nach außen abgewinkelten Randstreifen (**11**) als Ankerfuß.

6. Abmarkungsstein nach Anspruch 5, gekennzeichnet durch eine quadratische Außenberandung des Ankerfußes (**11**).

7. Abmarkungsstein nach einem oder mehreren der vorhergehenden Ansprüche, gekennzeichnet durch eine Mehrzahl von gleichmäßig auf dem Umfang verteilten Versteifungsrippen **(12**), die in der Kehle zwischen dem unteren Ende der Seitenwand (**6**) und dem Ankerfuß (**11**) dessen Abwinkelung stabilisieren.

8. Abmarkungsstein nach Ansprüchen 6 und 7, dadurch gekennzeichnet, daß die Versteifungsrippen (**12**) an den Ecken des quadratischen Ankerfußes (**11**) ausgeformt sind.

9. Abmarkungsstein nach einem oder mehreren der vorhergehenden Ansprüche, gekennzeichnet durch eine runde Querschnittsform.

10. Abmarkungsstein nach einem oder mehreren der vorhergehenden Ansprüche, dadurch gekennzeichnet, daß er aus gegebenenfalls faserverstärktem Kunststoff besteht.

11. Abmarkungsstein nach einem oder mehreren der vorhergehenden Ansprüche, dadurch gekennzeichnet, daß die erforderlichen Markierungskennzeichen bzw. Beschriftung in der Form von Einprägungen (**3**) in seiner Kopffläche (**2**), angebracht sind.

## Claims

1. Marker stone in the form of a hollow body (1) open downwards and widening slightly in a conical shape, with a flat or slightly dished head surface (2) exhibiting the identification marks (3), which changes in an essentially rectangular shape into its outer side surface (5), characterised by a one-piece structure reinforced in the head area (7) by a larger wall thickness.

2. Marker stone in accordance with Claim 1, characterised by the fact that the inner edge of the head area (7) is arched ip a dome-like manner in the lengthwise cross-section.

3. Marker stone in accordance with Claim 2, characterised by the fact that the inner contour (8) of the head area is edged in a hemispherical, elliptical or parabolic manner.

4. Marker stone in accordance with one of Claims 2 and/or 3, characterised by the fact that the transition of the inner contour (8) of the head area (7) to the inner side surface (9) of the side wall (6) is shaped as a shoulder (10), whose shape and dimensions correspond to the outside form of the transition (4) from the head surface (2) to the outer side surface (5).

5. Marker stone in accordance with one or more of the previously-mentioned claims, characterised by an edge strip (11) angled to the outside on the lower edge of the hollow body (1) as an anchor foot.

6. Marker stone in accordance with Claim 5, characterised by a square outside edge of the anchor foot (11).

7. Marker stone in accordance with one or more of the previously-mentioned claims, characterised by a number of stiffening ribs (12) distributed uniformly on the circumference in the angle between the lower end of the side wall (6) and the anchor foot (11), which stabilise the angle.

8. Marker stone in accordance with Claims 6 and 7, characterised by the fact that the stiffening ribs (12) are formed on the corners of the square anchor foot (11).

9. Marker stone in accordance with one or more of the previously-mentioned claims, characterised by a round cross-sectional shape.

10. Marker stone in accordance with one or more of the previously-mentioned claims, characterised by the fact that it may consist of fibreglass reinforced plastic.

11. Marker stone in accordance with one or more of the previously-mentioned claims, characterised by the fact that the necessary identification marks or lettering are applied in the form of indentations (3) in its head surface (2).

## Revendications

1. borne en forme de corps creux (1) à fond ouvert et s'élargissant vers le bas de façon un peu conique avec une tête à la surface (2) légèrement bombée ou plane sur laquelle sont inscrits les repères (3), surface qui passe angulairement en surface latérale (5) extérieure, est qualifiée par une structure d'un seul bloc et renforcée à la tête (7) par une plus grande épaisseur de paroi.

2. borne d'après la spécification 1, qualifiée par la bordure interne de la tête (7) cintrée en coupole dans un profil longitudinal.

3. borne d'après la spécification 2, qualifiée par le contour interne (8) de la tête qui est bordé de façon hémisphérique, elliptique ou parabolique.

4. borne d'après une des spécifications 2 et/ou 3, qualifiée par le passage du contour interne (8) de la tête (7) à la surface latérale (9) interne de la paroi latérale (6) formé en épaule (10), dont la forme et les dimensions de la partie extérieure du passage (4) de la surface de tête (2) correspond aux surfaces extérieures latérales (5).

5. borne d'après une ou plusieurs spécifications précédentes, qualifiée par une bande latérale (11) pliée vers l'extérieur au bord inférieur du corps creux (1) comme pied de l'ancre.

6. borne d'après la spécification 5, qualifiée par un bord externe quadratique du pied de l'ancre (11).

7. borne d'après une ou plusieurs des spécifications précédentes, qualifiée par une majorité de raidisseurs (12) répartis de manière égale sur le périmètre, qui apportent une stabilisation, dans la rainure entre l'extrémité inférieure de la paroi latérale (6) et le pied de l'ancre (11), de sa pliure.

8. borne d'après les spécifications 6 et 7, qualifiée par les raidisseurs (12) démoulés aux coins du pied de l'ancre (11) quadratique.

9. borne d'après une ou plusieurs des spécifications précédentes, qualifiée par une forme de coupe transversale ronde.

10. borne d'après une ou plusieurs des spécifications précédentes, qualifiée par sa matière artificielle et le cas échéant renforcée par des fibres.

11. borne d'après une ou plusieurs des spécifications précédentes, qualifiée par l'ajout de repères nécessaires ou de légendes qui sont imprimés (3) sur la surface de tête (2).
